# EUROPÄISCHE PATENTSCHRIFT

(11) **EP 4 077 999 B1**
(45) Veröffentlichungstag und Bekanntmachung des Hinweises auf die Patenterteilung: **16.10.2024**
(21) Anmeldenummer: 20819707.9
(22) Anmeldetag: 03.12.2020
(51) Int. Cl.: F16L 33/207, F16L 33/22

(54) **STECKVERBINDER UND STECKVERBINDERANORDNUNG**
PLUG CONNECTOR AND PLUG CONNECTOR ASSEMBLY
RACCORD ENFICHABLE ET ENSEMBLE RACCORD ENFICHABLE

(30) Priorität: 17.12.2019 DE 102019134681
(43) Veröffentlichungstag der Anmeldung: 26.10.2022
(73) Patentinhaber: Voss Automotive GmbH, 51688 Wipperfürth (DE)
(72) Erfinder: RUDEL, Stev, 51766 Engelskirchen (DE); KOLBERG, Ralf, 50733 Köln (DE)
(74) Vertreter: Dr. Solf & Zapf Patent- und Rechtsanwalts PartG mbB
(86) Internationale Anmeldenummer: PCT/EP2020/084395
(87) Internationale Veröffentlichungsnummer: WO 2021/122020

(56) Entgegenhaltungen:
- DE-A1- 10 355 463
- US-A- 5 882 047
- US-A- 996 114
- US-A1- 2008 169 646

## Beschreibung

Die Erfindung betrifft einen Steckverbinder gemäß dem Oberbegriff des Anspruchs 1.

Weiterhin betrifft die Erfindung einen Steckverbinderanordnung mit einem Steckverbinder der zuvor genannten Art und einer Rohrleitung.

Die DE 103 55 463 A1 offenbart eine Verbindungsvorrichtung für einen Schlauch. Der Schlauch ist in einen Montageraum zwischen einer Haltehülse und einem Rohr einführbar, wobei das Rohr der Verbindungsvorrichtung einen Dorn, und die Haltehülse Haltehülsesegmente aufweist. Die Haltehülse und das Rohr sind dabei einstückig und/oder materialeinheitlich ausgebildet und zur Anordnung und Lagerung des Schlauchs wird die Haltehülse im Zusammenwirken mit einem axialbeweglichen Spannring gegen eine Schlauchwand des Schlauchs verspannt.

Die US 996 114 A offenbart eine Rohrkupplung mit zwei miteinander verschraubbaren Kupplungsteilen. Die jeweilige Rohrleitung ist auf einen sich in Richtung des Rohres verjüngenden Dorn aufschiebbar. Weiterhin ist die Rohrleitung im aufgeschobenen Zustand in einem Zwischenraum, welcher von Klemmstegen und dem Dorn gebildet ist, angeordnet. Zudem sind die Klemmstege mittels einer Spannhülse, welche auf das jeweilige Kupplungsteil aufgeschraubt wird, gegen einen Außenumfang der jeweiligen Rohrleitung verspannt.

Aus der DE 602 12 018 T2 ist eine Schnellkupplung für verformbare Rohre bekannt. Dabei handelt es sich um Verbundrohre, die jeweils einen Kern aus Aluminium aufweisen, welcher auf seiner Innen- und Außenfläche mit zwei Schichten aus Kunststoff, insbesondere aus vernetztem oder nichtvernetztem Polyethylen, überzogen ist. Bei dieser Schnellkupplung wird die Rohrleitung auf einen zylindrisch ausgebildeten Dorn aufgeschoben, wobei die Rohrleitung beim Aufstecken mit einem Endabschnitt zuerst einen Dichtbereich und axial in Aufsteckrichtung betrachtet einen nachgeordneten Haltebereich passiert. Innerhalb des Dichtbereiches ist auf dem Dorn in einer Nut ein Dichtelement angeordnet, welches gegen einen Innenumfang der Rohrleitung dichtend wirkt. Innerhalb des Haltebereiches ist ebenfalls in einer umlaufenden Vertiefung ein Rastring angeordnet, welcher auf einer Außenseite eine Einhakeinrichtung aufweist, die gegen den Innenumfang der Rohrleitung wirkt und eine Entnahme der Rohrleitung verhindert. Weiterhin ist aus der genannten Schnellkupplung bekannt, dass ein Deckel den zylindrischen Dorn umgreift und dabei einen Innendurchmesser aufweist, welcher größer als der Außendurchmesser der zu befestigenden Rohrleitung ist und auf den Außenumfang der Rohrleitung gepresst wird.

Die aus dem Stand der Technik bekannte Rohrleitung hat dabei den Nachteil, dass die Schnellkupplung sowohl ein separates Dichtelement als auch einen Rastring benötigt. Weiterhin dient die Schnellkupplung zur fluidisch dichten Verbindung von Rohrleitungen aus Verbundwerkstoffen mit einem Metallkern, welcher mit Kunststoffschichten überzogen ist. Für Rohrleitungen aus einem polyolefinischen Werkstoff stellt sich dabei eine nur unzureichende Haltewirkung ein.

Weiterhin ist eine Kupplung beispielsweise aus der WO 2007/046712 A1 bekannt, bei der eine Rohrleitung auf einem Dorn aufgesteckt wird. Bei dieser Kupplung weist der Dorn kegelstumpfförmige Bereiche auf, die als Widerhakenelemente für einen Endabschnitt einer Rohrleitung dienen und die Entnahme der Rohrleitung erschweren. Weiterhin weist die Kupplung Schutzmittel vor äußeren Einflüssen in Form von einem ringförmigen Kragen auf, welcher auf zwei Stützelementen gehalten ist.

Die aus der WO 2007/046712 A1 bekannte Kupplung hat den Nachteil, dass zum Halten der Rohrleitung der Endabschnitt der Rohrleitung ausschließlich mittels der kegelstumpfförmigen Bereiche gehalten wird. Um eine Haltefunktionalität zu ermöglichen, wird dabei der Endabschnitt der Rohrleitung beim Aufstecken gedehnt. Hierbei wird die zulässige Streckdehnung allerdings häufig überschritten bzw. ist so groß, dass insbesondere Rohrleitungen nicht auf Basis polyolefinischer Werkstoffe verwendet werden können. Daher werden bei derartigen Kupplungen Rohrleitungen vorzugsweise aus Polyamiden verwendet.

Eine mögliche Applikation für eine erfindungsgemäße Steckverbinderanordnung sind Temperiersysteme für Batterien, wie z. B. in Elektrofahrzeugen. Um eine homogene Temperierung zu ermöglichen, werden die Kühlplatten der Batterien mit dem Temperiermedium durchströmt. Temperiermedium in diesem Sinne sind vorzugsweise Wasser und/oder Glykol. In bekannter Art werden hierbei Rohrleitungen aus Polyamiden verwendet. Polyamide haben bei dieser Applikation allerdings den Nachteil, dass die werkstofflichen Eigenschaften durch Wasser und Glykol negativ beeinflusst werden. Weiterhin sind die Rohstoffkosten, insbesondere für PA12, sehr hoch. Ferner ist PA12 aufgrund der weltweit hohen Nachfrage in Relation zu den bestehenden Herstellungskapazitäten immer wieder Lieferengpässen unterworfen.

Der Erfindung liegt die Aufgabe zugrunde, einen Steckverbinder und eine Steckverbinderanordnung für Rohrleitungen zu schaffen, welche die Montage vereinfacht und insbesondere die Herstellkosten verringert und gleichzeitig bei ausreichender Dichtigkeit eine die Rohrleitung schonende Anordnung der Rohrleitung mit einer ausreichend großen Haltekraft auf dem Steckverbinder ermöglicht.

Die Aufgabe wird erfindungsgemäß durch die Merkmale des Anspruchs 1 gelöst, dabei ist der Grundkörper monolithisch ausgebildet, wobei der Grundkörper sich axial über den Montageraum erstreckende Klemmstege aufweist und die Rohrleitung mittels der Klemmstege gegen den Dorn gepresst und komprimiert ist.

Der Montageraum ist dabei vorzugsweise zwischen dem Dorn und den radial zur Mittelachse von dem Außenumfang des Dorns beabstandeten Klemmstegen ausgebildet.

Durch die Gestaltung wird der Dichtbereich von dem Haltebereich separiert. Dadurch ist es möglich, dass beim Aufstecken des Endabschnitts der Rohrleitung auf den Dorn die Streckdehnung des Rohrleitungswerkstoffs nicht überschritten werden muss, um eine ausreichende Dichtigkeit und Haltekraft zu generieren. Insbesondere bei polyolefinischen Werkstoffen sollte eine Streckdehnung von 8 % bis 12 % nicht überschritten werden. Durch die erfindungsgemäße Komprimierung des Endabschnitts im Dichtbereich ist hinsichtlich des Standes der Technik nur eine geringere radiale Dehnung, insbesondere unterhalb einer Streckdehnung von 8 % bis 12 % des Rohrleitungswerkstoffs, der Rohrleitung notwendig, um eine ausreichende Dichtigkeit und Haltekraft zu gewährleisten. Vorteilhaft wird es dadurch ermöglicht, für die Rohrleitung einen Werkstoff insbesondere auf polyolefinischer Basis zu verwenden, welcher vorteilhaft hinsichtlich der Resistenz von Wasser und Glykol ist, eine gute Verfügbarkeit und geringe Materialkosten aufweist.

Rohrleitungen aus polyolefinischen Werkstoffen werden bislang vorwiegend für Trinkwasser-, Druckwasser-, Abwassersysteme oder in vergleichbaren Anwendungen industriell eingesetzt. Polyolefinische Werkstoffe umfassen insbesondere Polyethylen (PE), Polypropylen (PP) und Polybuten. Polyolefine zeichnen sich durch eine hohe Resistenz gegenüber Wasser und Glykol aus und haben im Vergleich zu Polyamiden deutlich geringere Rohstoffkosten. Auf Grund der Relaxation bzw. Retardation bei erhöhten Temperaturen und mechanischen Belastungen zeigen polyolefinische Werkstoffe bei Dehnungen oberhalb der Streckgrenze einen so genannten "Weißbruch", der auf erste schädigende Risse hinweist.

Die aus dem Stand der Technik bekannten Kupplungen sind dahingehend nur schlecht für Rohrleitungen mit einer geringen Streckdehnung, insbesondere unterhalb einer zulässigen Streckdehnung von 8 % bis 12 %, z. B. Rohrleitungen aus Polyolefinen, geeignet. Das liegt insbesondere daran, dass, um eine ausreichende Dichtigkeit und Haltekraft zu gewährleisten, die zulässige Streckdehnung des Rohrleitungswerkstoffs regelmäßig überschritten wird und/oder die Kupplungen sehr aufwändig in der Montage, komplex im Aufbau oder teuer in der Herstellung sind.

Weiterhin ermöglicht die Ausführung, den Steckverbinder im Spritzgießverfahren mit einem einfachem Werkzeugkonzept herzustellen.

Es ist vorgesehen, dass der Grundkörper des Steckverbinders monolithisch ausgebildet ist. Insbesondere umfasst der Grundkörper den Dorn und die Klemmstege.

Im Sinne der Erfindung bedeutet "monolithisch" materialeinheitlich aus einem Stück bestehend ausgebildet. Dabei schließt "monolithisch" einen kraft- und/oder formschlüssig aus einzelnen Komponenten zusammengefügten Körper aus. Zudem umfasst der Ausdruck "monolithisch" im Sinne der Erfindung auch keinen stoffschlüssigen, aus einzelnen Komponenten zusammengefügten Körper.

Weiterhin ist vorgesehen, dass die Klemmstege radial zur Mittelachse federnd ausgebildet sind. Der Steckverbinder weist diesbezüglich einen derart axial zur Mittelachse beweglichen Klemmring auf, dass der Klemmring bei einer axialen Bewegung in die Aufsteckrichtung eine radial zu der Mittelachse gerichtete Anpresskraft auf die Klemmstege ausüben kann. Durch die Anpresskraft auf die Klemmstege wirken diese auf den Endabschnitt der Rohrleitung ein, so dass der Endabschnitt der Rohrleitung im aufgesteckten Zustand in einer Fixierstellung des Klemmrings radial zur Mittelachse im Dichtbereich komprimiert wird.

Gemäß dieser Ausführung wird eine Montage und Demontage der Rohrleitung mit dem Steckverbinder signifikant verbessert, indem die Dichtwirkung und Haltewirkung durch eine axiale räumliche Separierung in den Dichtbereich und den Haltebereich und eine temporär funktionale Trennung der radialen Dehnung und der Komprimierung des Endbereichs der Rohrleitung vorgenommen werden. Beim Aufstecken der Rohrleitung muss daher lediglich ein aus der Reibung zwischen Dorn und Rohrleitung resultierender Widerstand und nachfolgend bei der axialen Bewegung des Klemmrings ein aus der Reibung zwischen den Klemmstegen und dem Klemmring resultierender Widerstand überwunden werden. In Summe ergibt sich dadurch eine ausreichende Halte- und Dichtwirkung, wobei die benötigte maximale Montagekraft geringgehalten und die Montage vereinfacht wird. Weiterhin kann mittels dieses Zusammenwirkens die radiale Dehnung des Endabschnitts der Rohrleitung unterhalb der Streckgrenze des Rohrleitungswerkstoffs gehalten und trotzdem eine zuverlässige Dichtigkeit und Haltefunktion gewährleistet werden. Vorteilhaft umhüllt der Klemmring in der Fixierstellung den Endabschnitt der Rohrleitung und schützt dadurch die Steckverbinderanordnung vor äußeren Einflüssen.

Erfindungsgemäß hat der Klemmring in einem Innenumfang für die Klemmstege vorzugsweise nutförmige Führungsbahnen ausgebildet. Erfindungsgemäß ist es diesbezüglich vorgesehen, dass die Klemmstege jeweils auf ihrer radial zur Mittelachse nach außen weisenden Seite eine Auflagefläche zur Anlage an einer Gegenfläche der Führungsbahnen ausgebildet haben. Die Auflagefläche der Klemmstege ist zumindest teilweise derart schräg zur Mittelachse abgewinkelt ausgebildet, dass sich ein gegen die Aufsteckrichtung weisendes Ende der Klemmstege keilförmig in seinem Querschnitt senkrecht zur Mittelachse verringert.

Weiterhin sind erfindungsgemäß die Führungsbahnen derart im Klemmring angeordnet, dass die Gegenfläche bei der axialen Bewegung des Klemmrings über die keilförmig abgewinkelte Auflagefläche gleitet und die jeweiligen Klemmstege, radial zur Mittelachse elastisch verbiegt. Die Führungsbahnen verhindern dabei vorteilhaft ein seitliches Ausbrechen der Klemmstege. Insbesondere verlaufen die Führungsbahnen in einer Nutform axial zu der Mittelachse durch den Klemmring hindurch, wobei sich an die Gegenfläche zwei insbesondere senkrecht zur Gegenfläche angeordnete Seitenwände zur seitlichen Führung der Klemmstege anschließen.

In einer vorteilhaften Ausführungsform der Erfindung wird die Dehnung und die Kompression des Endabschnitts der Rohrleitung dadurch bewirkt, dass die Außenseite des Dorns im Dichtbereich einen derart ausgebildeten Außenumfang aufweist, dass der Dorn im Dichtbereich den Endabschnitt der montierten Rohrleitung radial zur Mittelachse dehnt. Weiterhin sind vorzugsweise die Klemmstege den Dorn gleichmäßig umgebend mit einem radialen Abstand zur Außenseite des Dorns angeordnet. Hierbei üben die Klemmstege eine radial zu der Mittelachse gerichtete Anpresskraft auf einen Außenumfang der aufgesteckten Rohrleitung im Dichtbereich aus und haben sowohl eine komprimierende als auch, durch die gleichmäßige Verteilung, eine zentrierende Wirkung auf den Endabschnitt der Rohrleitung.

Insbesondere ist der Klemmring selbst monolithisch entsprechend der eingangs genannten Begriffsdefinition für den Ausdruck "monolithisch" zusammen in einem Herstellungsprozess mit dem Grundkörper einteilig monolithisch gefertigt. Hierbei ist vorzugsweise der Grundkörper nach der Fertigung mittels definierten Sollbruchstellen mit dem Klemmring verbunden. Insbesondere bei einer Montage der Rohrleitung auf den Steckverbinder wird der Klemmring vom Grundkörper getrennt. Alternativ kann der Klemmring als separates Element monolithisch unabhängig vom Grundkörper hergestellt sein.

Um die Rohrleitung entsprechend innerhalb des Montageraums auch gegen die Abzugskraft zu sichern bzw. die Abzugskraft zu erhöhen, weist zumindest ein Klemmsteg im Haltebereich eine radial zur Mittelachse hervorstehende Haltegeometrie auf. Vorzugsweise kann diese sich im aufgesteckten Zustand der Rohrleitung, bevorzugt in der Fixierstellung des Klemmrings, in einen Außenumfang der Rohrleitung eindrücken. Die Haltegeometrie kann dabei als eine in Aufsteckrichtung ansteigende Keilgeometrie, sägezahnförmig, rippenartig oder dergleichen ausgebildet sein. Vorteilhaft werden dadurch die Dichtfunktion und die Haltefunktion verbessert, indem besonders rohrleitungsschonend der Endabschnitt der Rohrleitung sowohl im Dichtbereich als auch im Haltebereich komprimiert und die notwendige radialen Dehnung des Endabschnitts der Rohrleitung zum Halten und Abdichten der Rohrleitung verringert werden.

Besonders vorteilhaft wird der Endabschnitt der Rohrleitung geschont und dadurch eine hohe Nutzungsdauer bewirkt, wenn die Außenseite des Dorns im Dichtbereich einen derart geringen Außenumfang ausgebildet hat, dass die Dehnung des Endabschnitts der Rohrleitung im Dichtbereich geringer ist als die zulässige Dehnung des Rohrleitungswerkstoffs, insbesondere geringer als 12 %, vorzugsweise geringer als 10 %, bevorzugt 8 %.

Weiterhin wird die der Erfindung zu Grunde gelegte Aufgabe mit einem Steckverbinder nach Anspruch 14 zur Verwendung in einer Steckverbinderanordnung, insbesondere einer zuvor genannten Steckverbindung, gelöst. Der Steckverbinder hat einen Grundkörper, welcher einen entlang einer Mittelachse verlaufenden und zumindest in einem Dorn geöffneten Strömungskanal ausgebildet hat. Der Strömungskanal ist zur fluidischen Verbindung mit einer Rohrleitung ausgebildet. Weiterhin ist eine Außenseite des Dorns zum Aufstecken eines Endabschnitts einer Rohrleitung in eine Aufsteckrichtung axial zur Mittelachse ausgebildet. Zur Anordnung eines Endabschnitts der Rohrleitung weist der Steckverbinder einen Montageraum auf. Der Dorn hat einen sich axial im Bereich des Montageraums erstreckenden Dichtbereich und einen in Aufsteckrichtung axial hinter dem Dichtbereich angeordneten und sich axial im Bereich des Montageraums erstreckenden Haltebereich ausgebildet. Weiterhin ist der Dichtbereich derart ausgebildet, dass der Endabschnitt der Rohrleitung radial zur Mittelachse gedehnt werden kann.

Erfindungsgemäß ist der Grundkörper monolithisch ausgebildet und der Grundkörper weist sich axial über den Montageraum erstreckende Klemmstege auf, wobei die Rohrleitung mittels der Klemmstege gegen den Dorn gepresst und komprimiert werden kann.

Weitere vorteilhafte Ausgestaltungsmerkmale der Erfindung sind in den Unteransprüchen enthalten. Es zeigen:
- Fig. 1: eine perspektivische Ansicht einer Ausführung eines Steckverbinders einer Steckverbinderanordnung,
- Fig. 2: eine perspektivische Ansicht des Steckverbinders gemäß Figur 1 aus einer anderen Perspektive,
- Fig. 3: eine Seitenansicht radial zu einer Mittelachse des Steckverbinders gemäß Figur 1,
- Fig. 4: eine Schnittansicht entlang der Trennlinie C gemäß Figur 2 durch den Steckverbinder gemäß Figur 2,
- Fig. 5: eine Draufsicht in eine Aufsteckrichtung E auf den Steckverbinder gemäß Figur 1,
- Fig. 6 bis 8: einen Verbindungsvorgang eines Steckverbinders gemäß Figur 1 mit einer Rohrleitung einer Steckverbinderanordnung in drei verschiedenen Zuständen.
- Fig. 9 und 10: einen Bewegungsvorgang eines Klemmrings in zwei Zuständen jeweils in geschnittenen Detailansichten axial zu der Aufsteckrichtung E gemäß Figur 1,
- Fig. 11: eine perspektivische Schnittansicht entlang der Aufsteckrichtung E gemäß Figur 1 durch eine Ausführung des Klemmrings und eine Ausführung eines Klemmstegs gemäß Figur 1,
- Fig. 12a: eine perspektivische Darstellung einer weiteren Ausführung des Klemmrings und einer weiteren Ausführung des Klemmstegs,
- Fig. 12b: eine Schnittansicht entlang der Trennlinie D gemäß Figur 12a,
- Fig. 13a: eine perspektivische Darstellung einer weiteren Ausführung des Klemmrings und einer weiteren Ausführung des Klemmstegs,
- Fig. 13b: eine Schnittansicht entlang der Trennlinie H gemäß Figur 13a und
- Fig. 14: eine Detailansicht eines mittels Sollbruchstellen mit einem Grundkörper verbundenen Klemmrings.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist.

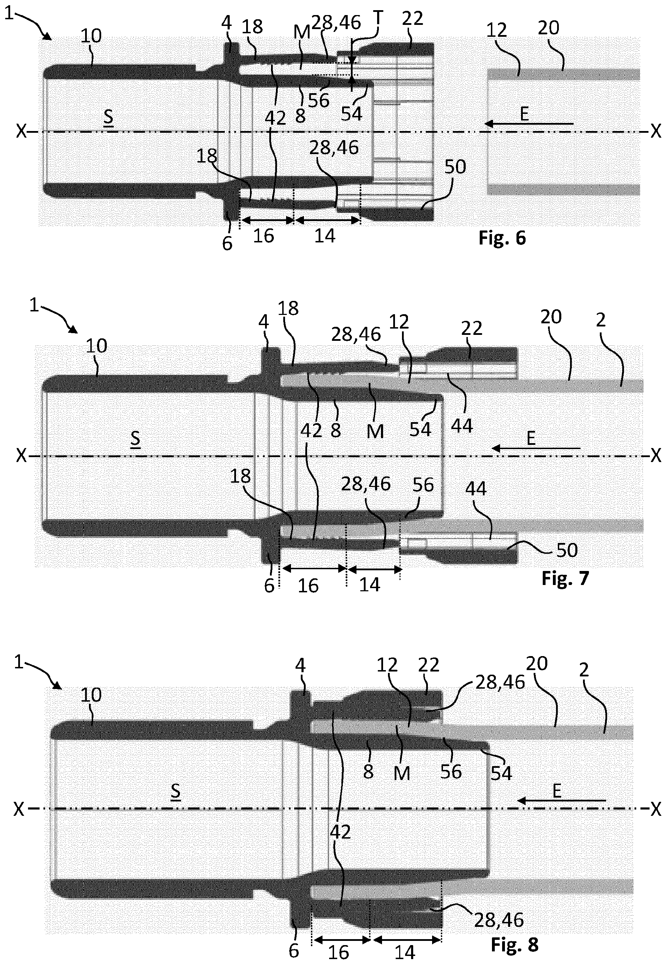

Die Erfindung betrifft eine Steckverbinderanordnung 1, wie sie zum Beispiel in der Figur 8 dargestellt ist, mit einer, wie dargestellt, aufgesteckten Rohrleitung 2 und einem Steckverbinder 4.

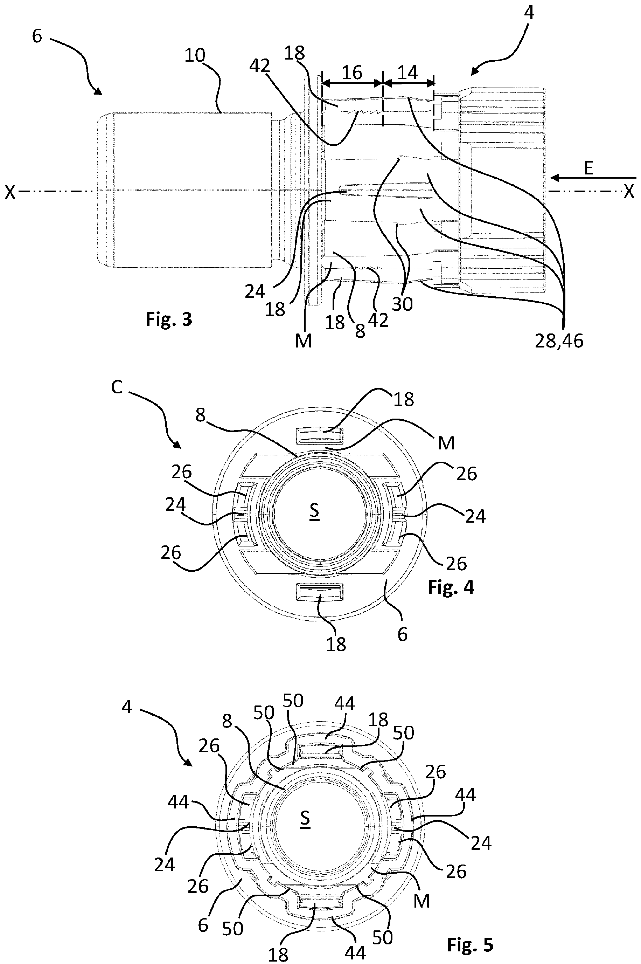

Entsprechend den Figuren 7 und 8 hat der Steckverbinder 4 einen Grundkörper 6, welcher, wie in den Figuren 6 bis 8 dargestellt, einen entlang einer Mittelachse X verlaufenden und zumindest in einem Dorn 8 geöffneten Strömungskanal S ausgebildet hat. Vorzugsweise weist der Steckverbinder 4, wie in Figur 3 dargestellt, auf der dem Dorn 8 gegenüberliegenden Seite eine Anschlussgeometrie 10 zur fluidischen Verbindung mit einer weiteren Rohrleitung 2, einem Aggregat oder einem andersartigen Anschluss auf. Vorzugsweise erstreckt sich der Strömungskanal S diesbezüglich axial zu der Mittelachse X durch den Steckverbinder 4 hindurch und mündet in einer Öffnung in der Anschlussgeometrie 10.

Wie in Figur 8 dargestellt, ist die Rohrleitung 2 fluidisch mit dem Strömungskanal S verbunden. Die Rohrleitung 2 ist mit einem Endabschnitt 12 in eine Aufsteckrichtung E, siehe Figuren 7 und 8, axial zur Mittelachse X auf eine Außenseite des Dorns 8 aufgesteckt, wobei entsprechend der Endabschnitt 12 in einem Montageraum M des Steckverbinders 4 angeordnet ist.

Wie in den Figuren 6 bis 8 dargestellt, hat der Dorn 8 einen sich axial im Bereich des Montageraums M erstreckenden Dichtbereich 14 und einen in Aufsteckrichtung E axial hinter dem Dichtbereich 14 angeordneten und sich axial im Bereich des Montageraums M erstreckenden Haltebereich 16 ausgebildet. Weiterhin ist der Dichtbereich 14 derart ausgebildet, dass der aufgesteckte Endabschnitt 12 der Rohrleitung 2 radial zur Mittelachse X gedehnt ist.

Der Grundkörper 6 weist sich axial über den Montageraum M erstreckende Klemmstege 18 auf. Weiterhin ist die Rohrleitung 2 mittels der Klemmstege 18 gegen den Dorn 8 gepresst und komprimiert. Besonders vorteilhaft ist es dadurch möglich, Rohrleitungen 2 aus einem Werkstoff in der Steckverbinderanordnung 1 zu verwenden, welcher insbesondere eine maximal zulässige Streckdehnung kleiner/gleich 12 % und/oder eine geringe Zeitstandfestigkeit aufweist.

Durch die radiale Komprimierung des Endabschnitts 12 der Rohrleitung 2 im Dichtbereich 14 ist nur eine geringere radiale Dehnung erforderlich, um eine ausreichende Dichtigkeit zu gewährleisten. Vorteilhaft wird dadurch beim Aufstecken des Endabschnitts 12 der Rohrleitung 2 auf den Dorn 8 die Streckdehnung des Rohrleitungswerkstoffs nicht überschritten. Insbesondere ist es dadurch möglich, für die Rohrleitung 2 einen Werkstoff auf polyolefinischer Basis zu verwenden, welcher vorteilhaft hinsichtlich der Resistenz von Wasser und Glykol ist, eine gute Verfügbarkeit und geringe Materialkosten aufweist.

Weiterhin bieten die Klemmstege 18 eine verbesserte Führung und Zentrierung der Rohrleitung 2 beim Aufstecken in Aufsteckrichtung E auf den Außenumfang des Dorns 8. Gleichzeitig wird durch die radiale Komprimierung, welche durch die Klemmstege 18 erwirkt wird, eine Abzugskraft der Rohrleitung 2 von dem Außenumfang des Dorns 8 gegen die Aufsteckrichtung E erhöht.

Vorzugsweise ist die Rohrleitung 2 aus einem thermoplastischen Elastomer oder insbesondere einem gefüllten Kunststoff hergestellt. Insbesondere ist die Rohrleitung 2 aus einem polyolefinischen Werkstoff, besonders bevorzugt aus einem Polypropylen (PP) oder insbesondere aus Polyethylen (PE), ausgebildet.

Weiterhin ermöglicht die Ausführung, den Steckverbinder 4 im Spritzgießverfahren mit einem einfachem Werkzeugkonzept herzustellen.

Der Grundkörper 6 ist monolithisch ausgebildet. Insbesondere umfasst der Grundkörper 6 den Dorn 8 und die Klemmstege 18.

"Monolithisch" bedeutet insbesondere materialeinheitlich aus einem Stück bestehend ausgebildet. Vorzugsweise schließt "monolithisch" einen kraft- und/oder formschlüssig aus einzelnen Komponenten zusammengefügten Körper aus. Am bevorzugtesten umfasst der Ausdruck "monolithisch" keinen stoffschlüssigen, aus einzelnen Komponenten zusammengefügten Körper.

In einer vorteilhaften Ausführung weist die Außenseite des Dorns 8 im Dichtbereich 14 einen derart ausgebildeten Außenumfang auf, dass der Dorn 8 wie in den Figuren 7 und 8 dargestellt, im Dichtbereich 14 den Endabschnitt 12 der montierten Rohrleitung 2 radial zur Mittelachse X dehnt. Im Zusammenspiel mit der radialen Dehnung des Außenumfangs des Dorns 8 und der Komprimierung durch die Klemmstege 18 wird der Endabschnitt 12 der Rohrleitung 2 materialschonend im Montageraum M gehalten.

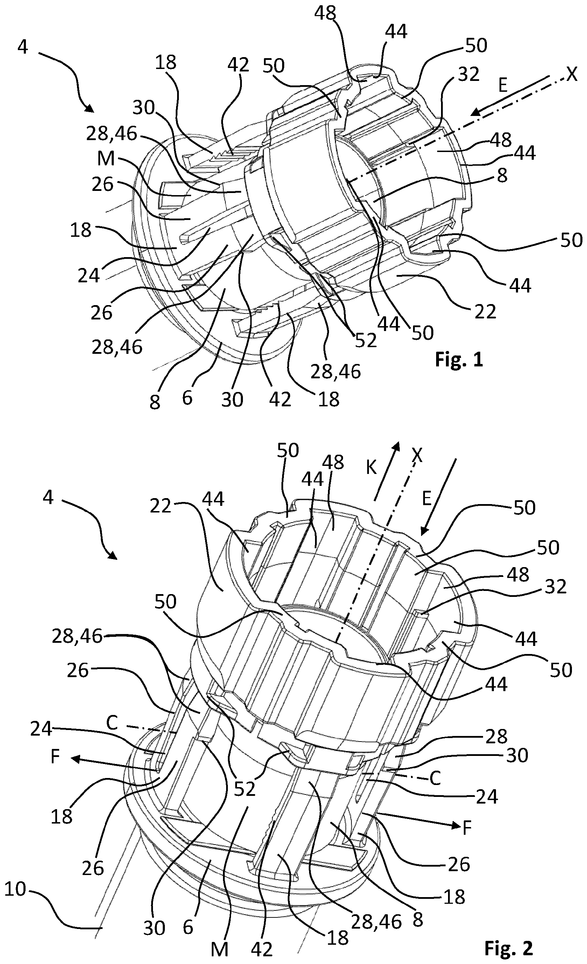

Vorteilhaft sind die Klemmstege 18, wie in den Figuren 1 und 2 dargestellt, den Dorn 8 gleichmäßig umgebend mit einem radialen Abstand zur Außenseite des Dorns 8 angeordnet. Insbesondere üben die Klemmstege 18 eine radial zu der Mittelachse X gerichtete Anpresskraft auf einen Außenumfang 20 der aufgesteckten Rohrleitung 2 im Dichtbereich 14 aus. Die Anpresskraft wirkt vorteilhaft einer Relaxation durch den Einfluss von Zeit und Temperatur der aufgedehnten Rohrleitung 2 entgegen. Insbesondere wird dadurch die Langzeitdichtigkeit der Steckverbinderanordnung 1 verbessert.

Insbesondere erstreckt sich der Montageraum M umfangsgemäß um den Dorn 8 herum und wird, wie in Figur 6 dargestellt, von einem Spalt, welcher zwischen den Klemmstegen 18 und dem Außenumfang des Dorns 8 ausgebildet ist, radial zur Mittelachse X begrenzt. Vorzugsweise wird durch die Spaltweite T die radiale Kompression auf den Außenumfang 20 der aufgesteckten Rohrleitung 2 hervorgerufen.

Die in den Figuren 1 bis 14 dargestellten Klemmstege 18 sind radial zur Mittelachse X federnd ausgebildet. Der Steckverbinder 4 weist dabei einen derart axial zur Mittelachse X beweglichen Klemmring 22 auf, dass der Klemmring 22 bei einer axialen Bewegung in die Aufsteckrichtung E eine radial zu der Mittelachse X gerichtete Anpresskraft auf die Klemmstege 18 ausüben kann. Dadurch wird bewirkt, dass durch das Zusammenspiel zwischen Klemmsteg 18 und Endabschnitt 12 der Rohrleitung 2 der Endabschnitt 12 der Rohrleitung 2 im aufgesteckten Zustand und in einer Fixierstellung des Klemmrings 22 radial zur Mittelachse X im Dichtbereich 14 komprimiert ist. Die Bewegung des Klemmrings 22 relativ zum Dorn 8 des Steckverbinders 4 ist in den Figuren 6 bis 8 dargestellt, wobei der Klemmring 22 in der Fixierstellung in Figur 8 dargestellt ist. Durch die Komprimierung des Endabschnitts 12 der Rohrleitung 2 kann die radiale Dehnung gering und insbesondere unterhalb der Streckgrenze des Rohrleitungswerkstoffs ausgebildet sein, wobei eine zuverlässige Dichtigkeit gewährleistet ist. In einem weiteren vorteilhaften Aspekt umhüllt der Klemmring 22 vorzugsweise den Endabschnitt 12 der Rohrleitung 2 in dem aufgesteckten Zustand, insbesondere im Bereich des Dorns 8, und schützt dadurch die Steckverbinderanordnung 1 vor äußeren Einflüssen.

Der Klemmring 22 erhöht weiterhin vorteilhaft in der Fixierstellung eine Abzugskraft, welche erforderlich ist, um die Rohrleitung 2 gegen die Aufsteckrichtung E von dem Dorn 8 abzuziehen. Besonders vorteilhaft wird der Endabschnitt 12 der Rohrleitung 2 mittels des Außenumfangs des Dorns 8 radial gedehnt. Besonders vorteilhaft werden weiterhin durch die axiale Separierung von dem Haltebereich 16 und dem Dichtbereich 14 selbst bei einer starken Materialbelastung, insbesondere einem "Weißbruch" im Haltebereich 16, die Dichtungseigenschaften der Steckverbinderanordnung 1 uneingeschränkt aufrechterhalten. Vorteilhaft kann der Klemmring in der Fixierstellung relativ zum Grundkörper 6 zumindest axial arretiert werden. Dafür weist der Grundkörper 6 und/oder der Klemmring 22 Arretierungsmittel auf. Vorzugsweise sind die Arretierungsmittel an dem Grundkörper 6 und/oder dem Klemmring 22 angeformt, besonders bevorzugt monolithisch mit selbigen ausgebildet. Vorzugsweise sind die Arretierungsmittel als zumindest eine Ausführung, insbesondere nach einer der nachfolgenden Ausführungsformen des Klemmstegs 18 mit Rastarmen 26 mit einer Hakengeometrie 30 und/oder mit einer Rastnut 34 und/oder mit einer Rastnase 38 ausgebildet.

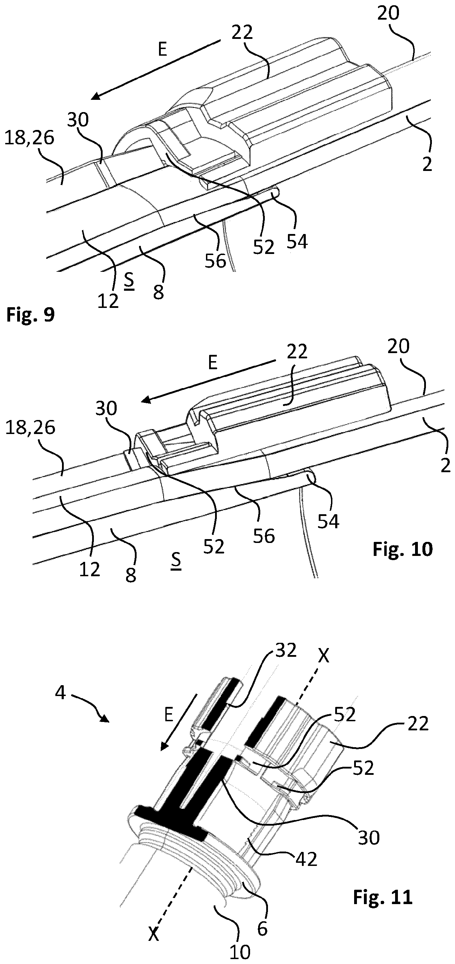

Besonders vorteilhaft weist zumindest ein Klemmsteg 18 einen axial zu der Mittelachse X verlaufenden und gegen die Aufsteckrichtung E geöffneten Schlitz 24 auf. Dieser Schlitz 24 ist beispielhaft in Figur 3 dargestellt. Vorzugsweise unterteilt der Schlitz 24 den Klemmsteg 18 in zwei jeweils in Richtung des Schlitzes 24 federbare Rastarme 26, wobei die Rastarme 26 insbesondere jeweils an ihrem geöffneten Ende 28 eine Hakengeometrie 30 aufweisen. Bevorzugt ist die Hakengeometrie 30, wie in Figur 11 dargestellt, seitlich an der vom Schlitz 24 abweisenden Seite der Rastarme 26 angeordnet und kann vorzugsweise in eine korrespondierend ausgebildete Einhakgeometrie 32 im Klemmring 22 federnd eingeführt und eingehakt werden. Dadurch ist es vorteilhaft möglich, dass der Klemmring 22 in der Fixierstellung gegen die Aufsteckrichtung E axial zur Mittelachse X unbeweglich mit dem Grundkörper 6 verbunden ist. Vorteilhaft kann die Hakengeometrie 30 lösbar von der Einhakgeometrie 32 gestaltet werden, indem die Rastarme 26 derart zum Schlitz 24 weisend elastisch ausgebildet sind, dass die Rastarme 26 zueinander weisend zusammengedrückt werden können. Eine dafür notwendige Kraft kann insbesondere je nach Werkstoff und/oder Konstruktion des Klemmstegs 18 eingestellt und insbesondere händisch von einem Monteur oder mit einer Zange oder einem andersartigen Lösewerkzeug erzeugt werden.

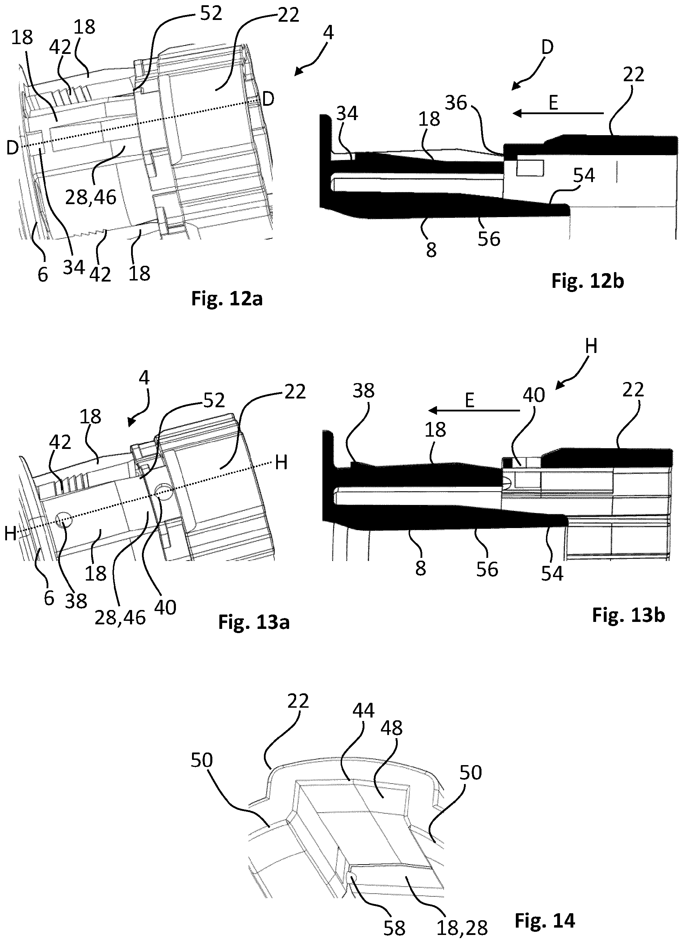

Eine weitere, in den Figuren 12a und 12b dargestellte, vorteilhafte Ausführung sieht vor, dass vorzugsweise zumindest ein Klemmsteg 18 an einem in Aufsteckrichtung E weisenden Ende 28 eine radial von der Mittelachse X wegweisend geöffnete Rastnut 34 aufweist. Insbesondere weist dabei der Klemmring 22 an einem in Aufsteckrichtung E weisenden Ende einen radial zu der Mittelachse X ausgebildeten Rastnocken 36 auf. Bevorzugt sind der Rastnocken 36 und die Rastnut 34 zueinander derart korrespondierend ausgebildet, dass der Rastnocken 36 in die Rastnut 34 einhaken kann. Vorteilhaft ist mittels des Einhakens der Klemmring 22 in der Fixierstellung gegen die Aufsteckrichtung E unbeweglich axial zur Mittelachse X mit dem Grundkörper 6 verbunden. Vorteilhaft kann der Klemmring 22 lösbar von dem Grundkörper 6 gestaltet werden, indem der Klemmring 22 im Bereich des Rastnockens 36 derart radial zur Mittelachse X elastisch ausgebildet ist, dass der Rastnocken 36 radial zur Mittelachse X aus der Rastnut 34 herausgehoben werden kann. Dadurch ist eine axiale Bewegung des Klemmrings 22 möglich. Eine dafür notwendige radiale Lösekraft kann je nach Werkstoff und/oder Konstruktion des Klemmrings 22 eingestellt und insbesondere händisch von einem Monteur oder mit einer Zange oder einem andersartigen Lösewerkzeug erzeugt werden.

Wiederum eine andere, in den Figuren 13a und 13b dargestellte Ausführung sieht vor, dass zumindest ein Klemmsteg 18 auf seiner radial zur Mittelachse X nach außen weisenden Seite eine Rastnase 38 ausgebildet hat. Vorzugsweise hat der Klemmring 22 in dieser Ausführung ein zu der Rastnase 38 korrespondierend ausgebildetes Rastfenster 40 ausgebildet. Hierbei sind insbesondere die Rastnase 38 und das Rastfenster 40 zueinander derart korrespondierend ausgebildet, dass die Rastnase 38 in das Rastfenster 40 einhaken kann. Dadurch ist vorteilhaft der Klemmring 22 in der Fixierstellung gegen die Aufsteckrichtung E unbeweglich axial zur Mittelachse X mit dem Grundkörper 6 verbunden. Vorteilhaft kann der Klemmring 22 lösbar von dem Grundkörper 6 gestaltet werden, indem der Klemmsteg 18 im Bereich der Rastnase 38 derart radial zur Mittelachse X elastisch ausgebildet ist, dass die Rastnase 38 radial zur Mittelachse X aus dem Rastfenster 40 in Richtung der Mittelachse X herausgedrückt werden kann, so dass eine axiale Bewegung des Klemmrings 22 möglich ist. Eine dafür notwendige radiale Lösekraft kann je nach Werkstoff und/oder Konstruktion des Klemmstegs 18 eingestellt und insbesondere händisch von einem Monteur oder mit einer Zange oder einem andersartigen Lösewerkzeug erzeugt werden.

Besonders vorteilhaft ermöglichen die Ausführungen der Klemmstege 18 mit den Rastarmen 26 mit der Hakengeometrie 30 und/oder der Rastnut 34 und/oder der Rastnase 38 insbesondere eine akustische Rückmeldung an den Monteur bei einem vollständig aufgeschobenem Klemmring 22. Hierdurch wird ein ordnungsgemäßer Verbau des Steckverbinders 4 unterstützt.

Vorzugsweise weist der Haltebereich 16 eine radial in den Montageraum M ragende Haltegeometrie 42 auf. Besonders bevorzugt weist zumindest ein Klemmsteg 18, wie in den Figuren 3, 6 und 7 dargestellt, im Haltebereich 16 die radial zur Mittelachse X hervorstehende Haltegeometrie 42 auf. Insbesondere kann sich die Haltegeometrie 42 im aufgesteckten Zustand der Rohrleitung 2, insbesondere bei einer axialen Bewegung des Klemmrings 22 in die Aufsteckrichtung E, in den Außenumfang 20 der Rohrleitung 2 eindrücken. Die Haltegeometrien 42 an den Klemmstegen 18 haben den vorteilhaften Effekt, dass die Rohrleitung 2 innerhalb des Montageraums M gegen die Abzugskraft gesichert ist bzw. die zum Abziehen der Rohrleitung 2 vom Dorn 8 erforderliche Abzugskraft erhöht ist.

Insbesondere ist die Haltegeometrie 42, wie in Figur 3 dargestellt, als eine in die Aufsteckrichtung E ansteigende Keilgeometrie, sägezahnförmig, rippenartig oder dergleichen ausgebildet. Vorteilhaft wird dadurch mittels der Haltegeometrie 42 der Dichtbereich 14 vom Haltebereich 16 separiert. Insbesondere wird dadurch die Dichtfunktion und die Haltefunktion verbessert, indem besonders rohrleitungsschonend der Endabschnitt 12 der Rohrleitung 2 sowohl im Dichtbereich 14 als auch im Haltebereich 16 komprimiert und die notwendige radialen Dehnung des Endabschnitts 12 der Rohrleitung 2 zum Halten und Abdichten der Rohrleitung 2 verringert werden. Besonders vorteilhaft ist, wie in den Figuren 6 bis 8 dargestellt, dass keine weitere radiale Dehnung des Endabschnitts 12 der Rohrleitung 2 im Haltebereich 16 notwendig ist, welche über die geringfügige radiale Dehnung des Endabschnitts 12 der Rohrleitung 2 im Dichtbereich 14 hinausgeht.

Vorzugsweise weist der Grundkörper 6 vier Klemmstege 18 auf, welche, wie in den Figuren 1 und 2 dargestellt, in Bezug auf den Außenumfang des Dorns 8 gleichmäßig verteilt sind. Vorzugsweise weisen dabei jeweils zwei Klemmstege 18 die Rastarme 26 mit der Hakengeometrie 30 und/oder der Rastnut 34 und/oder der Rastnase 38 und jeweils zwei Klemmstege 18 die Haltegeometrie 42 auf. Besonders bevorzugt sind dabei jeweils die Klemmstege 18 mit der Hakengeometrie 30 und/oder der Rastnut 34 und/oder der Rastnase 38 und die Klemmstege 18 mit der Haltegeometrie 42 zueinander gegenüberliegend angeordnet.

Erfindungsgemäß hat der Klemmring 22 in einem Innenumfang, wie in den Figuren 4 und 5 dargestellt, für die Klemmstege 18 vorzugsweise nutförmige Führungsbahnen 44 ausgebildet. Diesbezüglich haben die Klemmstege 18 jeweils auf ihrer radial zur Mittelachse X nach außen weisenden Seite eine Auflagefläche 46 zur Anlage an einer Gegenfläche 48 der Führungsbahnen 44 ausgebildet. Die Auflagefläche 46 der Klemmstege 18 ist zumindest teilweise derart schräg zur Mittelachse X abgewinkelt ausgebildet, dass sich ein gegen die Aufsteckrichtung E weisendes Ende 28 der Klemmstege 18 keilförmig in seinem Querschnitt senkrecht zur Mittelachse X verringert. Wie in den Figuren 4 und 5 dargestellt, sind die Führungsbahnen 44 dabei derart im Klemmring 22 angeordnet, dass die Gegenfläche 48 bei der axialen Bewegung des Klemmrings 22 über die keilförmig abgewinkelte Auflagefläche 46 gleitet und die jeweiligen Klemmstege 18, radial zur Mittelachse X elastisch verbiegt. Die Führungsbahnen 44 verhindern dabei vorteilhaft ein seitliches Ausbrechen der Klemmstege 18. Insbesondere verlaufen die Führungsbahnen 44 in einer Nutform axial zu der Mittelachse X durch den Klemmring 22 hindurch, wobei sich an die Gegenfläche 48 zwei insbesondere senkrecht zur Gegenfläche 48 angeordnete Seitenwände zur seitlichen Führung der Klemmstege 18 anschließen.

Vorzugsweise weist der Klemmring 22, wie in Figur 5 dargestellt, umlaufende Andrückelemente 50 auf. Die Andrückelemente 50 haben insbesondere einen Innenumfang, welcher dem Außenumfang 20 der Rohrleitung 2 entspricht. Vorteilhaft wird dadurch verhindert, dass die Rohrleitung 2 verkantet. Insbesondere erstrecken sich die Andrückelemente 50 über zumindest 50 % einer axialen Länge des Klemmrings 22 und sind vorzugsweise jeweils zwischen den Führungsbahnen 44 ausgebildet. Die Anordnung der Führungsbahnen 44 hat den Vorteil, dass die Rohrleitung 2 mittels der Andrückelemente 50 und der Führungsbahnen 44 nahezu vollumfänglich im Dichtbereich 14 und Haltebereich 16 radial zur Mittelachse X gestützt wird und insbesondere die radiale Dehnung der Rohrleitung 2 begrenzt ist.

In einer besonders vorteilhaften Ausführung, weist der Klemmring 22 Führungslippen 52 auf. Diese Ausführung ist in den Figuren 9 und 10 dargestellt. Die Führungslippen 52 sind vorzugsweise an dem in Aufsteckrichtung E weisenden Ende des Klemmrings 22, insbesondere im Bereich der Klemmstege 18, angeordnet. Besonders bevorzugt sind die Führungslippen 52 an das in Aufsteckrichtung E weisende Ende der Führungsbahnen 44 angeformt und bilden einen Übergang zu den Führungsbahnen 44. Besonders vorteilhaft sind die Klemmstege 18 über die Führungslippen 52 in die Führungsbahnen 44 einführbar, wobei die Klemmstege 18 positionssicher in die Führungsbahnen 44 geführt werden.

Vorteilhaft können die Führungslippen 52 radial und/oder umfangsgemäß zur Mittelachse X flexibel ausgebildet sein. Die Figuren 9 und 10 zeigen dabei eine vorteilhafte Ausführung der Erfindung mit dem Grundkörper 6, dem Klemmring 22 mit den Führungsbahnen 44 und den Führungslippen 52 und einer auf den Dorn 8 des Grundköpers 6 aufgesteckten Rohrleitung 2. Die Führungslippe 52 ist dabei derart flexibel ausgebildet, dass der Klemmring 22 in Aufsteckrichtung E klemmfrei bewegt und auf die Rohrleitung 2 und die Klemmstege 18 aufgeschoben werden kann. In Figur 9 ist dabei ein Vormontagezustand dargestellt, bei welchem noch ein Spalt zwischen dem Klemmring 22, insbesondere der Führungslippe 52 und dem Außenumfang 20 der Rohrleitung 2 vorhanden ist. In Figur 10 hingegen ist ein Teilmontagezustand dargestellt, in welchem der Klemmring 22 weiter als in Figur 9 in die Aufsteckrichtung E bewegt wurde. In diesem Teilmontagezustand besteht ein Anlagekontakt zwischen der flexiblen Führungslippe 52 und dem Außenumfang 20 der Rohrleitung 2. Die Führungslippe 52 lässt sich dabei geringfügig von dem Klemmsteg 18 radial von der Mittelachse X nach außen elastisch verformen und erleichtert dadurch das Einführen des Endes 28 des Klemmstegs 18 in die Führungsbahnen 44. Spätestens wenn mittels der Bewegung des Klemmrings 22 in Aufsteckrichtung E das Ende 28 des Klemmstegs 18 an einen Anfang der Führungsbahnen 44 gelangt, wird der jeweilige Klemmsteg 18 radial an den Außenumfang 20 der Rohrleitung 2 gepresst und erzeugt die zuvor beschriebene Dicht- und Haltefunktion.

Insbesondere weist der Dorn 8, wie in Figur 6 dargestellt, einen in Aufsteckrichtung E gesehen vor dem Dichtbereich 14 angeordneten Einführbereich 54 auf. Vorteilhaft weist der Einführbereich 54 einen geringeren Außendurchmesser auf als der Innendurchmesser der zu montierenden Rohrleitung 2, wobei der Einführbereich 54 und der Dichtbereich 14 vorzugsweise mit einem zur Mittelachse X angewinkelten Übergang 56 verbunden sind. Der Einführbereich 54 erleichtert das Aufstecken des Endabschnitts 12 der Rohrleitung 2 auf den Dorn 8. Mittels des abgewinkelten Übergangs 56 wird zudem die radiale Dehnung des Endabschnitts 12 der Rohrleitung 2 im Dichtbereich 14 rohrleitungsschonend, insbesondere gleichmäßig, erwirkt.

Besonders vorteilhaft wird der Endabschnitt 12 der Rohrleitung 2 geschont und dadurch eine hohe Nutzungsdauer bewirkt, wenn die Außenseite des Dorns 8 im Dichtbereich 14 einen derart geringen Außenumfang ausgebildet hat, dass die Dehnung des Endabschnitts 12 der Rohrleitung 2 im Dichtbereich 14 geringer ist als die zulässige Dehnung des Rohrleitungswerkstoffes, insbesondere geringer als 12 %, vorzugsweise geringer als 10 %, bevorzugt geringer als 8 %.

Vorteilhafterweise ist der Steckverbinder 4 mittels eines Spritzgussverfahrens hergestellt, wobei der Steckverbinderwerkstoff vorzugsweise ein, insbesondere glasfaserverstärkter, polyolefinischer Werkstoff oder bevorzugt ein thermoplastisches Elastomer ist. Die Rohrleitungswerkstoffe weisen bevorzugte Resistenzen gegen Wasser und Glykol auf und eigenen sich daher insbesondere für die Verwendung in Temperierkreisläufen. Weiterhin sind die polyolefinischen Werkstoffe und thermoplastischen Elastomere im Vergleich zu den, insbesondere aus der Automobilindustrie, bekannten Rohrleitungswerkstoffen, insbesondere Polyamide, günstiger und ohne Lieferengpässe verfügbar.

Insbesondere ist der Klemmring 22 monolithisch entsprechend der eingangs genannten Begriffsdefinition für den Ausdruck "monolithisch" hergestellt. Hierbei kann der Klemmring 22 in einem Herstellungsprozess mit dem Grundkörper 6 einteilig monolithisch gefertigt sein, wobei insbesondere nach der Fertigung der Grundkörper 6 und der Klemmring 22 mittels definierter Sollbruchstellen 58 verbunden sind und während der Montage vom Grundkörper 6 getrennt werden. Die Sollbruchstellen 58 sind beispielhaft in Figur 14 dargestellt. Weiterhin kann vorzugsweise der Klemmring 22 als ein vom Grundkörper 6 separates Element monolithisch hergestellt sein.

Insbesondere wird der Steckverbinder 4 zusammen mit dem Klemmring 22 gemeinsam monolithisch als ein Spritzgussteil gefertigt. Hierbei ist ein in Aufsteckrichtung E weisendes Ende des Klemmrings 22 mit den gegen die Aufsteckrichtung E weisenden Enden 28 der Klemmstege 18 verbunden. Zwei Formbacken formen dabei die äußere Struktur des Grundkörpers 6 und des Klemmrings 22, und ein Kernzugwerkzeug formt die innere Struktur des Grundkörpers 6 und des Klemmrings 22. Die Öffnungsrichtung F der Formbacken und die Öffnungsrichtung K des Kernzugwerkzeugs sind jeweils in Figur 2 gekennzeichnet. Insbesondere kann die Haltegeometrie 42 mit einem in Aufsteckrichtung E betrachteten Hinterschnitt durch die Formbacken ausgebildet werden. Der Grundkörper 6 ist zusammen mit dem Klemmring 22 in einem entformten, aber noch verbundenen Zustand in den Figuren 1 und 2 dargestellt. Insbesondere ist der Klemmring 22 mit dünnwandigen Sollbruchstellen 58, wie in Figur 14 dargestellt, mit den Enden 28 der Klemmstege 18 verbunden, welche mit einer geringen Lösekraft getrennt werden können, insbesondere händisch von einem Monteur. Die Trennung des Klemmrings 22 von dem Grundkörper 6 ermöglicht die Bewegung des Klemmrings 22 axial zu der Mittelachse X. Die Trennung kann vorteilhafterweise erst an einem Endmontageort der Rohrleitung 2 erfolgen, so dass der Klemmring 22 mit dem Grundkörper 6 ohne Fremdeinwirkung unverlierbar verbunden ist.

In dem erfinderischen Aspekt betrifft die Erfindung einen Steckverbinder 4, welcher beispielhaft perspektivisch in den Figuren 1 und 2 dargestellt ist. Der Steckverbinder 4 dient zur Verwendung in einer Steckverbinderanordnung 1. Diesbezüglich dient der Steckverbinder 4 insbesondere zur Verwendung in einer Steckverbinderanordnung 1 nach einer der oben genannten Ausführungsmöglichkeiten.

Der Steckverbinder 4 hat einen Grundkörper 6, welcher einen entlang einer Mittelachse X verlaufenden und zumindest in einem Dorn 8 geöffneten Strömungskanal S ausgebildet hat. Diesbezüglich ist der Strömungskanal S zur fluidischen Verbindung mit einer Rohrleitung 2 ausgebildet, wobei eine Außenseite des Dorns 8 zum Aufstecken eines Endabschnitts 12 einer Rohrleitung 2 in eine Aufsteckrichtung E axial zur Mittelachse X ausgebildet ist.

Zur Anordnung eines Endabschnitts 12 der Rohrleitung 2 weist der Steckverbinder 4 einen Montageraum M auf. Weiterhin hat der Dorn 8 einen sich axial im Bereich des Montageraums M erstreckenden Dichtbereich 14 und einen in Aufsteckrichtung E axial hinter dem Dichtbereich 14 angeordneten und sich axial im Bereich des Montageraums M erstreckenden Haltebereich 16 ausgebildet. Der Haltebereich 16 weist vorzugsweise eine radial in den Montageraum M ragende Haltegeometrie 42 auf. Der Dichtbereich 14 ist derart ausgebildet, dass der Endabschnitt 12 der Rohrleitung 2 radial zur Mittelachse X gedehnt werden kann.

Erfindungsgemäß weist der Grundkörper 6 sich axial über den Montageraum M erstreckende Klemmstege 18 auf, wobei die Rohrleitung 2 mittels der Klemmstege 18 gegen den Dorn 8 gepresst und komprimiert werden kann. Vorzugsweise sind dafür die Klemmstege 18 radialelastisch ausgebildet. Der Steckverbinder 4 erfüllt die zuvor genannten, der Erfindung zu Grunde gelegten Aufgaben, indem er eine rohrleitungswerkstoffschonende Montage ermöglicht. Durch das synergetische Zusammenspiel aus Dehnung und Kompression des Endabschnitts 12 der Rohrleitung 2 wird eine geringere als die aus dem Stand der Technik erforderliche radiale Dehnung zum Dichten und Halten der Rohrleitung 2 ermöglicht. Dadurch ist es insbesondere möglich, als Rohrleitungswerkstoff Werkstoffe mit einer niedrigeren Streckgrenze, aber vorteilhaften Werkstoffeigenschaften, insbesondere polyolefinische Werkstoffe mit einer hohen Resistenz gegen Wasser und Glykol, zu verwenden.

Weiterhin ist erfindungsgemäß der Grundkörper 6 monolithisch ausgebildet. Insbesondere umfasst der Grundkörper 6 den Dorn 8 und die Klemmstege 18.

Der Steckverbinder 4 kann insbesondere mit einem oder mehreren der zuvor genannten, insbesondere den Steckverbinder 4 betreffenden Merkmalen ausgebildet sein.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind.

### Bezugszeichenliste

- 1: Steckverbinderanordnung
- 2: Rohrleitung
- 4: Steckverbinder
- 6: Grundkörper
- 8: Dorn 8
- 10: Anschlussgeometrie
- 12: Endabschnitt
- 14: Dichtbereich
- 16: Haltebereich
- 18: Klemmstege
- 20: Außenumfang der Rohrleitung
- 22: Klemmring
- 24: Schlitz
- 26: Rastarme
- 28: Ende der Rastarme/Klemmstege
- 30: Hakengeometrie
- 32: Einhakgeometrie
- 34: Rastnut
- 36: Rastnocken
- 38: Rastnase
- 40: Rastfenster
- 42: Haltegeometrie
- 44: Führungsbahnen
- 46: Auflagefläche
- 48: Gegenfläche
- 50: Andrückelemente
- 52: Führungslippe
- 54: Einführbereich
- 56: Übergang
- 58: Sollbruchstelle
- S: Strömungskanal
- X: Mittelachse
- M: Montageraum
- T: Spaltweite

- E: Aufsteckrichtung
- F: Öffnungsrichtung der Formbacken
- K: Öffnungsrichtung des Kernzugwerkzeugs

## Patentansprüche

1. Steckverbinder (4) zur Verwendung in einer Steckverbinderanordnung (1), mit einem Grundkörper (6), welcher einen entlang einer Mittelachse (X) verlaufenden und zumindest in einem Dorn (8) geöffneten Strömungskanal (S) ausgebildet hat, wobei der Strömungskanal (S) zur fluidischen Verbindung mit einer Rohrleitung (2) ausgebildet ist, wobei eine Außenseite des Dorns (8) zum Aufstecken eines Endabschnitts (12) einer Rohrleitung (2) in eine Aufsteckrichtung (E) axial zur Mittelachse (X) ausgebildet ist, und der Steckverbinder (4) einen Montageraum (M) zur Anordnung eines Endabschnitts (12) der Rohrleitung (2) aufweist, wobei der Dorn (8) einen sich axial im Bereich des Montageraums (M) erstreckenden Dichtbereich (14) und einen in Aufsteckrichtung (E) axial hinter dem Dichtbereich (14) angeordneten und sich axial im Bereich des Montageraums (M) erstreckenden Haltebereich (16) ausgebildet hat, wobei der Dichtbereich (14) derart ausgebildet ist, dass der Endabschnitt (12) der Rohrleitung (2) radial zur Mittelachse (X) gedehnt werden kann, wobei der Grundkörper (6) monolithisch ausgebildet ist und der Grundkörper (6) sich axial über den Montageraum (M) erstreckende Klemmstege (18) aufweist, wobei die Rohrleitung (2) mittels der Klemmstege (18) gegen den Dorn (8) gepresst und komprimiert werden kann, und die Klemmstege (18) radial zur Mittelachse (X) federnd ausgebildet sind, wobei der Steckverbinder (4) einen axial zur Mittelachse (X) beweglichen Klemmring (22) aufweist, **dadurch gekennzeichnet, dass** der Klemmring (22) bei einer axialen Bewegung in die Aufsteckrichtung (E) eine radial zu der Mittelachse (X) gerichtete Anpresskraft auf die Klemmstege (18) ausüben kann, so dass der Endabschnitt (12) der Rohrleitung (2) im aufgesteckten Zustand und in einer Fixierstellung des Klemmrings (22) radial zur Mittelachse (X) im Dichtbereich (14) komprimierbar ist, wobei der Klemmring (22) für die Klemmstege (18) Führungsbahnen (44) ausgebildet hat, wobei die Klemmstege (18) jeweils auf ihrer radial zur Mittelachse (X) nach außen weisenden Seite eine Auflagefläche (46) zur Anlage an einer Gegenfläche (48) der Führungsbahnen (44) ausgebildet haben, wobei die Auflagefläche (46) der Klemmstege (18) zumindest teilweise derartig schräg zur Mittelachse (X) abgewinkelt ausgebildet ist, dass sich ein gegen die Aufsteckrichtung (E) weisendes Ende (28) der Klemmstege (18) in seinem Querschnitt senkrecht zur Mittelachse (X) verringert, wobei die Führungsbahnen (44) derart im Klemmring (22) angeordnet sind, dass die Gegenfläche (48) bei der axialen Bewegung des Klemmrings (22) über die keilförmig abgewinkelte Auflagefläche (46) gleitet und den jeweiligen Klemmsteg (18) radial zur Mittelachse X elastisch verbiegt.

2. Steckverbinder (4) nach Anspruch 1,
**dadurch gekennzeichnet, dass** die Klemmstege (18) den Dorn (8) gleichmäßig umgebend mit einem radialen Abstand zur Außenseite des Dorns (8) angeordnet sind und eine radial zu der Mittelachse (X) gerichtete Anpresskraft auf einen Außenumfang der aufgesteckten Rohrleitung (2) im Dichtbereich (14) ausüben.

3. Steckverbinder (4) nach Anspruch 1 oder 2,
**dadurch gekennzeichnet, dass** zumindest ein Klemmsteg (18) einen axial zu der Mittelachse (X) verlaufenden und gegen die Aufsteckrichtung (E) geöffneten Schlitz (24) aufweist, welcher den Klemmsteg (18) in zwei, in Richtung des Schlitzes federbare Rastarme (26) unterteilt, wobei die Rastarme (26) jeweils an ihrem geöffneten Ende (28) eine Hakengeometrie (30) aufweisen, welche seitlich an der vom Schlitz (24) abweisenden Seite der Rastarme (26) angeordnet ist und in eine korrespondierend ausgebildete Einhakgeometrie (32) im Klemmring (22) federnd eingeführt und eingehakt werden kann, so dass der Klemmring (22) dadurch in der Fixierstellung gegen die Aufsteckrichtung (E) axial zur Mittelachse (X) unbeweglich mit dem Grundkörper (6) verbunden ist.

4. Steckverbinder (4) nach einem der Ansprüche 1 bis 3,
**dadurch gekennzeichnet, dass** zumindest ein Klemmsteg (18) an einem in Aufsteckrichtung (E) weisenden Ende eine radial von der Mittelachse (X) wegweisend geöffnete Rastnut (34) aufweist und der Klemmring (22) an einem in Aufsteckrichtung (E) weisenden Ende einen radial zu der Mittelachse (X) ausgebildeten Rastnocken (36) aufweist, wobei der Rastnocken (36) und die Rastnut (34) zueinander derart korrespondierend ausgebildet sind, dass der Rastnocken (36) in die Rastnut (34) einhaken kann und der Klemmring (22) dadurch in der Fixierstellung gegen die Aufsteckrichtung (E) unbeweglich axial zur Mittelachse (X) mit dem Grundkörper (6) verbunden ist.

5. Steckverbinder (4) nach einem der Ansprüche 1 bis 3,
**dadurch gekennzeichnet, dass** zumindest ein Klemmsteg (18) auf seiner radial zur Mittelachse X nach außen weisenden Seite eine Rastnase (38) ausgebildet hat und der Klemmring (22) ein zu der Rastnase (38) korrespondierend ausgebildetes Rastfenster (40) ausgebildet hat, wobei die Rastnase (38) und das Rastfenster (40) zueinander derart korrespondierend ausgebildet sind, dass die Rastnase (38) in das Rastfenster (40) einhaken kann und der Klemmring (22) dadurch in der Fixierstellung gegen die Aufsteckrichtung (E) unbeweglich axial zur Mittelachse (X) mit dem Grundkörper (6) verbunden ist.

6. Steckverbinder (4) nach einem der Ansprüche 1 bis 5,
**dadurch gekennzeichnet, dass** zumindest ein Klemmsteg (18) im Haltebereich (16) eine radial zur Mittelachse (X) hervorstehende Haltegeometrie (42) aufweist, welche sich im aufgesteckten Zustand der Rohrleitung (2), insbesondere bei einer axialen Bewegung des Klemmrings (22) in die Aufsteckrichtung (E), in einen Außenumfang der Rohrleitung (2) eindrücken kann.

7. Steckverbinder (4) nach einem der Ansprüche 1 bis 6,
**dadurch gekennzeichnet, dass** der Dorn (8) einen in Aufsteckrichtung (E) gesehen vor dem Dichtbereich (14) angeordneten Einführbereich (54) aufweist, welcher einen geringeren Außendurchmesser aufweist als ein Innendurchmesser der zu montierenden Rohrleitung (2), wobei der Einführbereich (54) und der Dichtbereich (14) vorzugsweise mit einem zur Mittelachse (X) angewinkelten Übergang (56) verbunden sind.

8. Steckverbinder (4) nach einem der Ansprüche 1 bis 7,
**dadurch gekennzeichnet, dass** die Außenseite des Dorns (8) im Dichtbereich (14) einen derart geringen Außenumfang ausgebildet hat, dass die Dehnung des Endabschnitts (12) der Rohrleitung (2) im Dichtbereich (14) geringer ist als die zulässige Dehnung des Rohrleitungswerkstoffes, insbesondere geringer als 12 %, vorzugsweise geringer als 10 %, bevorzugt geringer als 8 %.

9. Steckverbinder (4) nach einem der Ansprüche 1 bis 8,
**dadurch gekennzeichnet, dass** der Steckverbinder (4) mittels eines Spritzgussverfahrens hergestellt ist und der Steckverbinderwerkstoff ein glasfaserverstärktes Polypropylen oder insbesondere ein Polyoxymethylene ist.

10. Steckverbinder (4) nach einem der Ansprüche 1 bis 9,
**dadurch gekennzeichnet, dass** der Grundkörper (6) und der Klemmring (22) einteilig monolithisch gefertigt und nach der Fertigung mittels definierten Sollbruchstellen (58) verbunden sind.

11. Steckverbinderanordnung (1) mit einem Steckverbinder (4) gemäß einem der Ansprüche 1 bis 10 und einer aufgesteckten Rohrleitung (2).

12. Steckverbinderanordnung (1) nach Anspruch 11,
**dadurch gekennzeichnet, dass** die Rohrleitung (2) aus einem polyolefinischen Werkstoff oder einem thermoplastischen Elastomer ausgebildet ist.

## Claims

1. Plug-in connector (4) for use in a plug-in connector arrangement (1), comprising a main body (6), which has formed a flow channel (S) that extends along a centre axis (X) and opens at least in a barb (8), wherein the flow channel (S) is designed for fluidic connection with a pipeline (2), wherein an outer side of the barb (8) is designed for plug-mounting an end portion (12) of a pipeline (2) in an plug-mounting direction (E) axially in relation to the centre axis (X), and the plug-in connector (4) has a fitting space (M) for arrangement of an end portion (12) of the pipeline (2), wherein the barb (8) has formed a sealing region (14) extending axially in the region of the fitting space (M) and a retaining region (16), which axially follows the sealing region (14) in the plug-mounting direction (E) and extends axially in the region of the fitting space (M), wherein the sealing region (14) is designed such that the end portion (12) of the pipeline (2) can be expanded radially in relation to the centre axis (X), wherein the main body (6) is formed monolithically and the main body (6) has clamping bars (18) extending axially over the fitting space (M), wherein the pipeline (2) can be pressed against the barb (8) and compressed by means of the clamping bars (18), and the clamping bars (18) are resilient radially in relation to the centre axis (X), wherein the plug-in connector (4) has a clamping ring (22) which is movable axially in relation to the centre axis (X), **characterized in that** the clamping ring (22) can exert a contact pressure, directed radially in relation to the centre axis (X), on the clamping bars (18) on an axial movement in the plug-mounting direction (E), with the result that the end portion (12) of the pipeline (2) can be compressed radially in relation to the centre axis (X) in the sealing region (14) in the plug-mounted state and in a fixing position of the clamping ring (22), wherein the clamping ring (22) has formed guide tracks (44) for the clamping bars (18), wherein the clamping bars (18) each have a support surface (46), for bearing against a mating surface (48) of the guide tracks (44), formed on their sides facing radially outwards from the centre axis (X), wherein the support surface (46) of the clamping bars (18) is at least partially angled obliquely to the centre axis (X) such that the cross section of an end (28) of the clamping bars (18) that points counter to the plug-mounting direction (E) decreases in a direction perpendicular to the centre axis (X), wherein the guide tracks (44) are arranged in the clamping ring (22) such that the mating surface (48) slides over the support surface (46), which is angled in a wedge shape, and elastically bends the respective clamping bar (18) radially in relation to the centre axis X on the axial movement of the clamping ring (22) .

2. Plug-in connector (4) according to Claim 1,
**characterized in that** the clamping bars (18) are arranged evenly all around the barb (8) at a radial spacing from the outer side of the barb (8) and exert a contact pressure, directed radially in relation to the centre axis (X), on an outer circumference of the plug-mounted pipeline (2) in the sealing region (14).

3. Plug-in connector (4) according to Claim 1 or 2,
**characterized in that** at least one clamping bar (18) has a slot (24), which extends axially in relation to the centre axis (X), is open counter to the plug-mounting direction (E) and subdivides the clamping bar (18) into two latching arms (26) that are resilient in the direction towards the slot, wherein the latching arms (26) at their open ends (28) each have a hook geometry (30), which is arranged laterally on that side of the latching arms (26) facing away from the slot (24) and can be resiliently introduced and hooked into a correspondingly formed hook-in geometry (32) in the clamping ring (22), with the result that the clamping ring (22) is thereby connected to the main body (6) so as to be immovable axially in relation to the centre axis (X) counter to the plug-mounting direction (E) in the fixing position.

4. Plug-in connector (4) according to one of Claims 1 to 3,
**characterized in that,** at an end pointing in the plug-in direction (E), at least one clamping bar (18) has a latching groove (34) which is open radially away from the centre axis (X) and, at an end pointing in the plug-in direction (E), the clamping ring (22) has a latching cam (36) formed radially in relation to the centre axis (X), wherein the latching cam (36) and the latching groove (34) are formed correspondingly to one another such that the latching cam (36) can hook into the latching groove (34) and the clamping ring (22) is thereby connected to the main body (6) so as to be immovable axially in relation to the centre axis (X) counter to the plug-mounting direction (E) in the fixing position.

5. Plug-in connector (4) according to one of Claims 1 to 3,
**characterized in that** at least one clamping bar (18) has a latching lug (38) formed on its side facing radially outwards in relation to the centre axis X and the clamping ring (22) has a latching aperture (40) which is formed correspondingly to the latching lug (38), wherein the latching lug (38) and the latching aperture (40) are formed correspondingly to one another such that the latching lug (38) can hook into the latching aperture (40) and the clamping ring (22) is thereby connected to the main body (6) so as to be immovable axially in relation to the centre axis (X) counter to the plug-mounting direction (E) in the fixing position.

6. Plug-in connector (4) according to one of Claims 1 to 5,
**characterized in that** at least one clamping bar (18) in the retaining region (16) has a retaining geometry (42), which protrudes radially in relation to the centre axis (X) and can press into an outer circumference of the pipeline (2) in the plug-mounted state of the pipeline (2), in particular on an axial movement of the clamping ring (22) in the plug-mounting direction (E).

7. Plug-in connector (4) according to one of Claims 1 to 6,
**characterized in that** the barb (8) has an insertion region (54), which is in front of the sealing region (14) as viewed in the plug-mounting direction (E) and has a outside diameter which is smaller than an inside diameter of the pipeline (2) to be fitted, wherein the insertion region (54) and the sealing region (14) are preferably connected by a transition (56) which is angled in relation to the centre axis (X).

8. Plug-in connector (4) according to one of Claims 1 to 7,
**characterized in that** the outer side of the barb (8) has formed a small outer circumference in the sealing region (14) such that the expansion of the end portion (12) of the pipeline (2) in the sealing region (14) is smaller, in particular less than 12%, preferably less than 10%, preferably less than 8% smaller, than the permissible expansion of the pipeline material.

9. Plug-in connector (4) according to one of Claims 1 to 8,
**characterized in that** the plug-in connector (4) is produced by means of an injection moulding process and the plug-in connector material is a glass-fibre-reinforced polypropylene or in particular a polyoxymethylene.

10. Plug-in connector (4) according to one of Claims 1 to 9,
**characterized in that** the main body (6) and the clamping ring (22) are manufactured monolithically in one piece and are connected after manufacture by means of defined intended breaking points (58).

11. Plug-in connector arrangement (1) comprising a plug-in connector (4) according to one of Claims 1 to 10 and a plug-mounted pipeline (2).

12. Plug-in connector arrangement (1) according to Claim 11,
**characterized in that** the pipeline (2) is made of a polyolefinic material or a thermoplastic elastomer.

## Revendications

1. Connecteur enfichable (4) destiné à être utilisé dans un ensemble formant connecteur enfichable (1), ledit connecteur enfichable comprenant
un corps de base (6) qui comporte un conduit d'écoulement (S) qui s'étend le long d'un axe central (X) et qui est ouvert au moins dans un mandrin (8), le conduit d'écoulement (S) étant conçu pour établir une liaison fluidique avec une canalisation (2), un côté extérieur du mandrin (8) étant conçu pour placer une portion d'extrémité (12) d'une canalisation (2) dans une direction de placement (E) axialement par rapport à l'axe central (X), et le connecteur enfichable (4) comportant un espace de montage (M) destiné à disposer une portion d'extrémité (12) de la canalisation (2), le mandrin (8) comportant une zone d'étanchéité (14) qui s'étend axialement dans la zone de l'espace de montage (M) et une zone de retenue (16) qui est disposée axialement en arrière de la zone d'étanchéité (14) dans la direction de placement (E) et qui s'étend axialement dans la zone de l'espace de montage (M), la zone d'étanchéité (14) étant conçue de manière à ce que la portion d'extrémité (12) de la canalisation (2) puisse être étirée radialement par rapport à l'axe central (X), le corps de base (6) étant monolithique et le corps de base (6) comportant des nervures de serrage (18) qui s'étendent axialement sur l'espace de montage (M), la canalisation (2) pouvant être pressée et comprimée contre le mandrin (8) au moyen des nervures de serrage (18), et les nervures de serrage (18) étant conçues pour être élastiques radialement par rapport à l'axe central (X),
le connecteur enfichable (4) comportant une bague de serrage (22) qui est mobile axialement par rapport à l'axe central (X), **caractérisé en ce que** la bague de serrage (22) peut exercer sur les nervures de serrage (18) une pression de contact dirigée radialement vers l'axe central (X) pendant un mouvement axial dans la direction de placement (E) de sorte que la portion d'extrémité (12) de la canalisation (2) puisse être comprimée radialement par rapport à l'axe central (X) dans la zone d'étanchéité (14) à l'état mis en place et dans une position de fixation de la bague de serrage (22), la bague de serrage (22) comportant des pistes de guidage (44) destinées aux nervures de serrage (18), les nervures de serrage (18) comportant chacune, sur leur côté dirigé vers l'extérieur radialement à l'axe central (X), une surface d'appui (46) destinée à venir en appui sur une surface homologue (48) des pistes de guidage (44),
la surface d'appui (46) des nervures de serrage (18) étant conçue pour être au moins partiellement inclinée obliquement par rapport à l'axe central (X) de manière à ce qu'une extrémité (28) des nervures de serrage (18), qui est dirigée à l'opposé de la direction de placement (E), diminue dans une vue en coupe transversale de celle-ci perpendiculairement à l'axe central (X), les pistes de guidage (44) étant disposées dans la bague de serrage (22) de manière à ce que la surface homologue (48) glisse sur la surface d'appui (46), inclinée en forme de coin, lors du mouvement axial de la bague de serrage (22) et plie élastiquement la nervure de serrage respective (18) radialement par rapport à l'axe central X.

2. Connecteur enfichable (4) selon la revendication 1,
**caractérisé en ce que** les nervures de serrage (18) sont disposées uniformément autour du mandrin (8) à une distance radiale du côté extérieur du mandrin (8) et une force de pression, dirigée radialement vers l'axe central (X), est appliquée sur une circonférence extérieure de la canalisation (2) mise en place dans la zone d'étanchéité (14).

3. Connecteur enfichable (4) selon la revendication 1 ou 2,
**caractérisé en ce qu'**au moins une nervure de serrage (18) comporte une fente (24) qui s'étend axialement par rapport à l'axe central (X) et qui est ouverte à l'opposé de la direction de placement (E) et qui divise la nervure de serrage (18) en deux bras d'encliquetage (26) déformables élastiquement en direction de la fente, les bras d'encliquetage (26) présentant chacun à leur extrémité ouverte (28) une géométrie de crochet (30) qui est disposée latéralement du côté des bras d'encliquetage (26) opposé à la fente (24) et peut être insérée et accrochée de manière élastique dans une géométrie d'accrochage (32) de forme correspondante dans la bague de serrage (22) de sorte que la bague de serrage (22) soit ainsi reliée au corps de base (6) de manière immobile axialement à l'axe central (X) dans la position de fixation à l'opposé de la direction de placement (E).

4. Connecteur enfichable (4) selon l'une des revendications 1 à 3,
**caractérisé en ce qu'**au moins une nervure de serrage (18) comporte une rainure d'encliquetage (34) qui est ouverte radialement à l'opposé de l'axe central (X) à une extrémité dirigée dans la direction de placement (E) et la bague de serrage (22) comporte, à une extrémité dirigée dans la direction de placement (E), une came d'encliquetage (36) formée radialement par rapport à l'axe central (X), la came d'encliquetage (36) et la rainure d'encliquetage (34) étant conçues de manière à correspondre l'une à l'autre de manière à ce que la came d'encliquetage (36) puisse s'accrocher dans la rainure d'encliquetage (34) et à ce que la bague de serrage (22) soit ainsi reliée au corps de base (6) de manière immobile axialement par rapport à l'axe central (X) dans la position de fixation à l'opposé de la direction de placement (E).

5. Connecteur enfichable (4) selon l'une des revendications 1 à 3,
**caractérisé en ce qu'**au moins une nervure de serrage (18) comporte un ergot d'encliquetage (38) sur son côté dirigé vers l'extérieur radialement par rapport à l'axe central X et la bague de serrage (22) comporte une fenêtre d'encliquetage (40) conçue de manière à correspondre à l'ergot d'encliquetage (38), l'ergot d'encliquetage (38) et la fenêtre d'encliquetage (40) étant conçus de manière à correspondre l'un à l'autre de manière à ce que l'ergot d'encliquetage (38) puisse s'accrocher dans la fenêtre d'encliquetage (40) et à ce que la bague de serrage (22) soit ainsi reliée au corps de base (6) de manière immobile axialement par rapport à l'axe central (X) dans la position de fixation à l'opposé de la direction de placement (E).

6. Connecteur enfichable (4) selon l'une des revendications 1 à 5,
**caractérisé en ce qu'**au moins une nervure de serrage (18) présente dans la zone de retenue (16) une géométrie de retenue (42) qui fait saillie radialement par rapport à l'axe central (X) et qui peut être enfoncée dans une circonférence extérieure de la canalisation (2) à l'état mis en place de la canalisation (2), en particulier lorsque la bague de serrage (22) effectue un mouvement axial dans la direction de placement (E).

7. Connecteur enfichable (4) selon l'une des revendications 1 à 6,
**caractérisé en ce que** le mandrin (8) comporte une zone d'insertion (54) qui est disposée en avant de la zone d'étanchéité (14) par référence à la direction de placement (E) et qui présente un diamètre extérieur inférieur à un diamètre intérieur de la canalisation (2) à monter, la zone d'insertion (54) et la zone d'étanchéité (14) étant de préférence reliées à une transition (56) inclinée par rapport à l'axe central (X) .

8. Connecteur enfichable (4) selon l'une des revendications 1 à 7,
**caractérisé en ce que** le côté extérieur du mandrin (8) dans la zone d'étanchéité (14) présente une petite circonférence extérieure de manière à ce que la dilatation de la portion d'extrémité (12) de la canalisation (2) dans la zone d'étanchéité (14) soit inférieure à la dilatation admissible de la matière de la canalisation, en particulier inférieure à 12 %, de préférence inférieure à 10 %, de manière préférée inférieure à 8 %.

9. Connecteur enfichable (4) selon l'une des revendications 1 à 8,
**caractérisé en ce que** le connecteur enfichable (4) est fabriqué au moyen d'un procédé de moulage par injection et la matière du connecteur enfichable est un polypropylène renforcé de fibres de verre ou en particulier un polyoxyméthylène.

10. Connecteur enfichable (4) selon l'une des revendications 1 à 9,
**caractérisé en ce que** le corps de base (6) et la bague de serrage (22) sont fabriqués d'une seule pièce de manière monolithique et sont reliés après la fabrication au moyen de points de rupture (58) définis.

11. Ensemble formant connecteur enfichable (1) comprenant un connecteur enfichable (4) selon l'une des revendications 1 à 10 et une canalisation (2) mise en place.

12. Ensemble formant connecteur enfichable (1) selon la revendication 11,
**caractérisé en ce que** la canalisation (2) est formée à partir d'une matière polyoléfinique ou d'un élastomère thermoplastique.
